# EUROPEAN PATENT APPLICATION

(11) **EP 2 626 245 A1**
(43) Date of publication of application: **14.08.2013**
(21) Application number: 13154626.9
(22) Date of filing: 08.02.2013
(51) Int. Cl.: B60Q 1/26, A41D 19/015, A42B 3/04

(54) **Light signalling means for helmet and associated control means**

(30) Priority: 09.02.2012 IT TV20120020
(71) Applicant: Bernardi, Marilena, 31055 Quinto di Treviso (TV) (IT)
(72) Inventor: Guadagnin, Giorgio, 31055 Quinto di Treviso (TV) (IT)
(74) Representative: Dragotti, Gianfranco

(57) **Abstract**

Luminous signalling means (12) comprise: at least one luminous signalling device (16) suitable for being provided on a helmet (14); and means (18; 181) for operating the at least one luminous signalling device (16). The luminous signalling means (12) are characterized in that they comprise at least one glove (20, 201) on which the operating means (18; 181) for the at least one luminous signalling device (16) are arranged.

## Description

The present invention relates to luminous signalling means comprising a helmet and the associated operating means.

In the motorcycling sector, helmets comprising luminous signalling systems positioned on the rear side and visible from the rear when the motorcycle is being ridden are known in the prior art.

One of these systems is described in US patent 7,948,367 which describes a helmet provided with a luminous signalling device located on the rear side of the helmet and suitable for being operated by the user. The luminous signalling device is connected by means of a wired or wireless connection to a control unit located on the motorcycle. The control unit, when the control for the directional indicator located on the handlebars of the motorcycle is activated, sends a signal to the luminous signalling device positioned on the helmet. When it receives the signal, the device lights up, providing an indication of the turning direction.

In this way, indication of the direction of turning performed by the user is rendered more visible compared to the use of the single indicator located on the back of and/or on the side of the motorcycle.

The prior art, although well-established, is not without drawbacks.

For example, in the case where a motorcyclist falls or dismounts the motorcycle in conditions of poor visibility it could be advantageous to active the luminous signalling device on the helmet in order to signal his/her position to the other road users and/or to emergency services. However, the motorcyclist could be far from the motorcycle, unable to reach the controls situated on the motorcycle handlebars.

At the same time it could be advantageous also to equip the helmets used for example by skiers with a luminous signalling device, for indicating the direction taken when skiing down a slope, an obstacle or the position of the skier in the event of a fall or poor visibility.

The object of the present invention is therefore to overcome, at least partly, the drawbacks of the prior art.

A first task of the present invention is to provide luminous signalling means for a helmet which may be activated without operating pushbuttons or levers located on a motorcycle.

A second task of the present invention is to provide luminous signalling means for a helmet which may be used also by a skier or, more generally, in all those situations where a helmet is used.

It is therefore a task of the present invention to provide a helmet provided with luminous signalling devices which are independent of the motorcycle.

The characteristic features and advantages of the luminous signalling means provided in accordance with the principles of the invention will emerge more clearly from the description below of a number of examples of embodiment provided by way of a nonlimiting example with reference to the accompanying drawings in which:
Fig. 1 shows a rear view of a helmet according to the present invention;
Fig. 2 shows a perspective side view of a helmet according to the present invention;
Figs. 3 and 4 shows a view of the palm of gloves according to the present invention;
Figs. 5, 6, 7 and 8 show, in the form of a schematic block diagram, a number of embodiments of luminous signalling means according to the present invention;
Figs. 9, 10 and 11 show luminous signalling means according to the present invention in three different operating conditions; and
Fig. 12 shows, in the form of a schematic block diagram, an embodiment of the luminous signalling means according to the present invention.

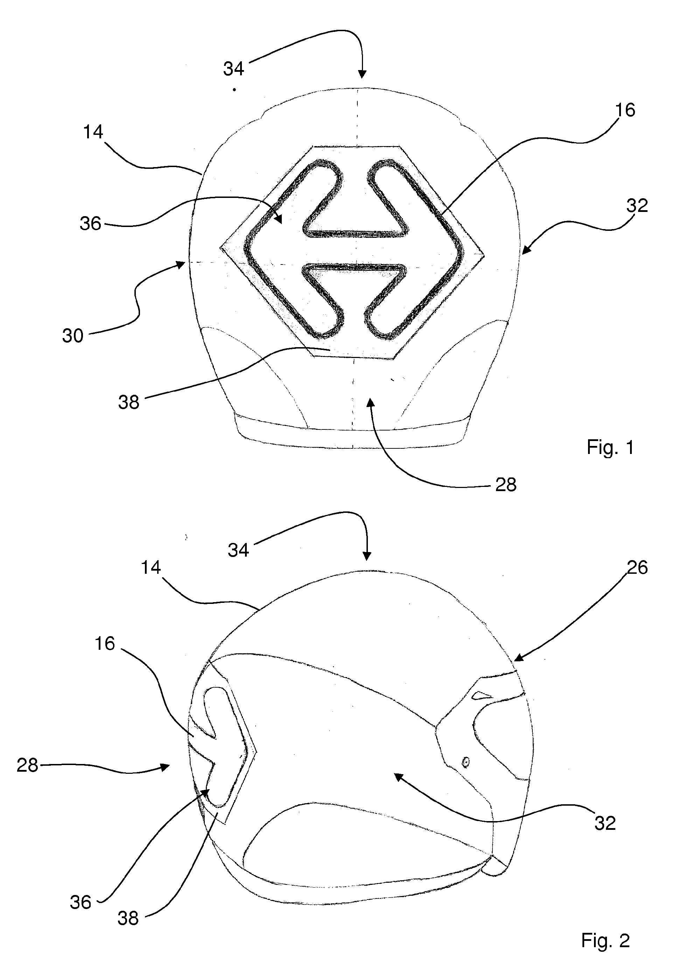

Figures 1-8 show in detail luminous signalling means 12 according to the present invention. The luminous signalling means 12 comprise:
   at least one luminous signalling device 16 suitable for being provided on a helmet 14;
   means 18; 181 for operating the at least one luminous signalling device 16.

The luminous signalling means 12 are **characterized in that** they comprise at least one glove 20; 201 on which said means 18; 181 for operating the luminous signalling device 16 are arranged.

Advantageously, the luminous signalling means 12 comprise a helmet 14 on which the at least one signalling device 16 is provided.

From here on, "front side" 26 of the helmet 14 is understood as meaning the side where the opening for the user's face is provided, while "rear side" 28 of the helmet 14 is understood as meaning the side opposite to the front side 26. The helmet 14 further comprises two side surfaces 30, 32 and a cap part 34.

With reference to Figure 1, the at least one luminous signalling device 16 provided on the helmet 14 may be advantageously positioned on the rear side 28.

According to a possible embodiment of the present invention, the helmet 14 comprises a plurality of luminous signalling devices 16.

According to a possible embodiment of the present invention the at least one luminous signalling device 16 may be provided, not only on the rear side 28, but also:
on the side surfaces 30, 32;
on the front side 26; and/or
on the cap part 34;

Advantageously, the luminous signalling device may be provided with LED lights which are denoted overall by the reference number 36. The LED lights 36 may be, for example, arranged on a panel 38.

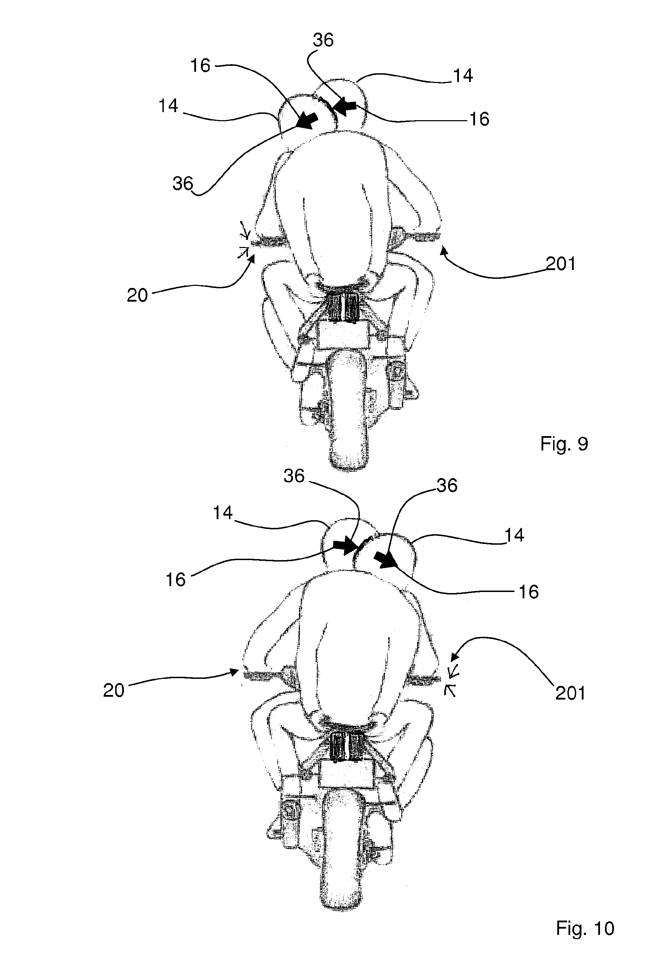

As can be clearly seen in Figures 9-11, the lights may be suitable for being illuminated in groups, so as to create a plurality of different forms, for example:
an arrow pointing to the right, for indicating turning to the right;
an arrow pointing to the left, for indicating turning to the left;
a hexagonal form for indicating stopping; and
both arrows for indicating an emergency.

Advantageously, the LED lights may consist of a plurality of colours suitable for being associated with a plurality of commands. For example:
orange for turning and emergencies;
red for stopping.

As will be clear to the person skilled in the art, the LED lights may create other forms and use other colours in order to satisfy other specific requirements.

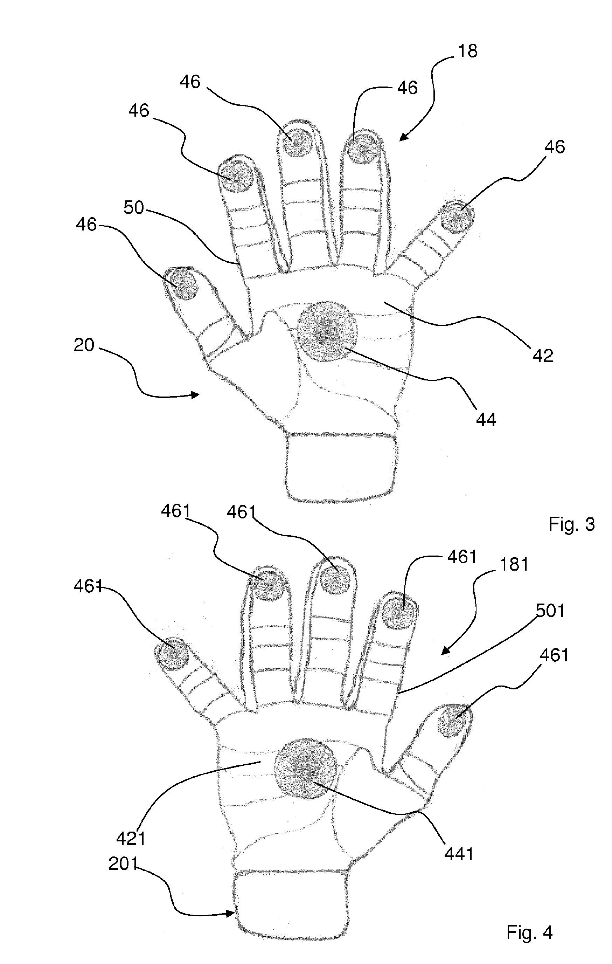

With particular reference to the embodiments shown in Figures 4, 6 and 8, the luminous signalling means 12 may comprise a left-hand glove 20 and/or a right-hand glove 201. The numbering of the parts of the right-hand glove 201 corresponds to the numbering of the corresponding parts on the left-hand glove 20, plus the suffix "1".

With reference to Figures 3 and 4, the glove 20, 201 according to the present invention will now be described in detail. The glove 20, 201 comprises a palm surface 42, 421. Advantageously, the palm surface 42, 421 is provided with operating means 18, 181. According to a possible embodiment of the present invention, the operating means comprise sensors 44, 46; 441, 461. According to a first embodiment of the present invention the sensors 44, 46; 441, 461 comprise a palm sensor 44, 441 located in the vicinity of the central part of the palm surface 42, 421.

According to an alternative embodiment, the sensors comprise terminal sensors 46, 461 located on the fingers of the glove 20, 201.

Advantageously, the operating means comprise both a palm sensor 44, 441 and terminal sensors 46, 461 located on the fingers of the glove 20, 201.

According to a possible embodiment of the present invention, the sensors 44, 46; 441, 461 comprise the palm sensor 44, 441 and two terminal sensors 46, 461 located respectively on the index finger and on the ring finger of the glove 20, 201.

Advantageously, the sensors 44, 46; 441, 461 comprise a sensor 46 located on the thumb and able to be activated by pressing the thumb against the side surface of the glove 50, 501.

The sensors 44, 46; 441, 461 used are of the type known per se which may be easily imagined by the person skilled in the art. They may be chosen, for example, from among pressure sensors.

The transmission of the commands from the operating means 18, 181 to the at least one luminous signalling device may be performed by means of transmission means 22, 221; 24.

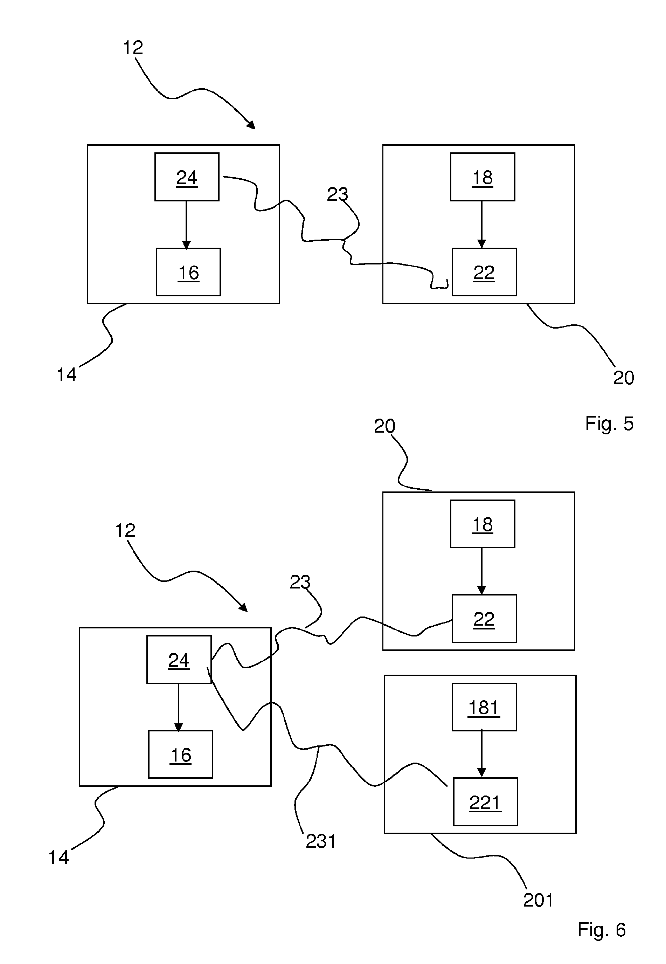

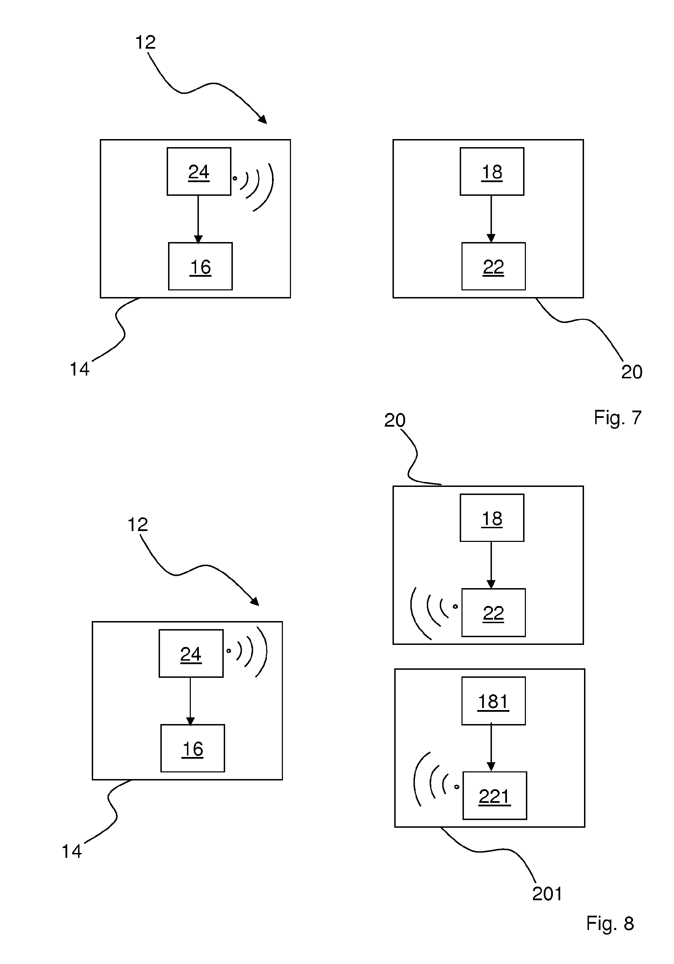

According to a first embodiment of the present invention, shown in Figures 5 and 6, the transmission means 22, 221; 24 comprise a cable connection 23, 231 suitable for connecting said sensors 44, 46; 441, 461 to said luminous signalling device 16. According to an alternative embodiment of the present invention, shown in Figures 7 and 8, the transmission means comprise a wireless connection between the operating means 18, 181 and the at least one luminous signalling device 16.

According to an embodiment, shown in Figures 5 and 6, the operating means 18, 181 are connected in a manner known per se to first emitters 22, 221 located on the glove.

With particular reference to the embodiment shown in Figures 5 and 7, the luminous signalling means comprise a single glove 20, for example the left-hand glove. The means 22, 24 for communication between signalling device 16 and operating means 18 may comprise:
- a first signal emitter 22 positioned on the glove 20 and suitable for emitting a signal at a given wavelength; and
- a signal receiver 24 positioned on the helmet 14 and suitable for receiving a signal at the wavelength which the first signal emitter 22 is designed to emit.

In a manner which will be obvious to the person skilled in the art, the signalling means may comprise only a right-hand glove 201.

With particular reference to the embodiment shown in Figures 6 and 8, the luminous signalling means comprise two gloves 20, 201, respectively a left-hand glove and right-hand glove. The means 22, 221; 24 for communication between signalling device 16 and operating means 18, 181 may comprise:
- a first signal emitter 22 positioned on the left-hand glove 20 and suitable for emitting a signal at a given wavelength;
- a second signal emitter 221 positioned on the right-hand glove 201 and suitable for emitting a signal at a given wavelength; and
- a signal receiver 24 positioned on the helmet 14 and suitable for receiving a signal at the wavelength which the first and second signal emitters 22, 221 are designed to emit.

Advantageously, said signal receiver 24 is designed to perform switching on and off of the at least one luminous signalling device 16.

The operating principle of the luminous signalling means 12 according to the present invention will now be described.

According to a possible embodiment shown in Figure 10, when the motorcycle handgrip is squeezed by the right hand wearing the right-hand glove 201, the sensors 441, 461 send a signal by means of the second emitter 221 to the receiver 24 which is designed to switch on the at least one luminous signalling device 16 so as to signal turning to the right. In the same way, as shown in Figure 9, when the motorcycle handgrip is squeezed by the left hand wearing the left-hand glove 20, the sensors 44, 46 are designed to send a signal by means of the first emitter 22 to the receiver 24 which is designed to switch on the at least one luminous signalling device 16 so as to signal turning to the left.

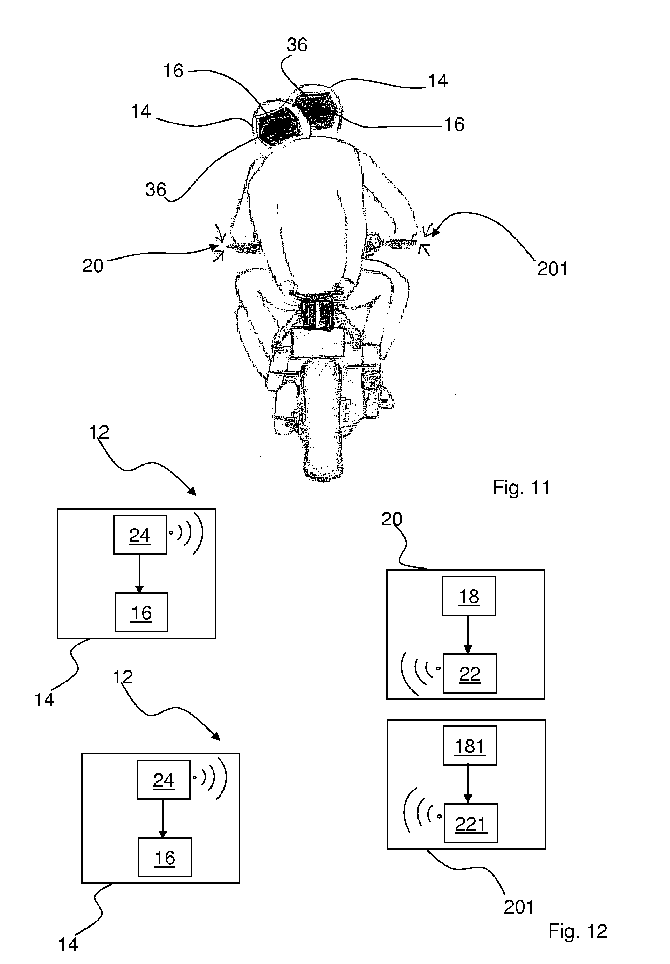

According to a possible embodiment of the present invention, there exists a further operating condition (shown in Figure 11): when the right hand and the left hand simultaneously perform a squeezing action, a stop signal is activated.

According to a possible embodiment of the present invention, release of the squeezing action generates a signal for switching off the at least one luminous signalling device 16, while a double squeezing action generates a signal for keeping the at least one luminous signalling device 16 in operation. At the same time, by means of a further double squeezing action, the luminous signalling device 16 is switched off.

Advantageously, the luminous signalling means 12 may comprise, fitted inside the gloves 20, 21, a buzzer designed to be activated so as to signal the state of the at least one luminous signalling device 16.

According to a possible embodiment of the present invention, a switch (not shown) is provided on the helmet 14 in order to operate the luminous signalling device 16, for example intermittently, in order to signal a danger and attract attention. Advantageously, the same signalling function may be activated by beating one's chest with one of the palms 44, 441 open.

Advantageously, the helmet 14 is provided with a device (not shown) designed to be activated following an impact, so as to emit a signal requesting help and a positioning signal, for example via an incorporated telephone device.

According to a possible embodiment of the present invention, the luminous signalling means 12 may comprise a recording device (not shown) suitable for recording the signals which the user sends to the system. Advantageously the recording device is designed to store the data relating to the signals for a twenty-four hour time period. In the event of an accident it may be advantageously used as a black box in order to reconstruct the manoeuvres performed by the user.

According to a possible embodiment of the present invention, the helmet 14 may be used by the police. For this purpose, the helmet 14 may be provided with a luminous signalling device 16 on the cap part 34, designed to emit a continuous or flashing blue light.

In the same manner the present invention may be advantageously used by fire fighters to signal their presence in dangerous situations or to signal emergencies.

According to a possible embodiment of the present invention, the luminous signalling device may comprise a laser device. The laser device may be used, for example, by fire fighters to signal their presence or send information in smoke-filled environments.

Advantageously, in the case of a motorcycle being ridden by a motorcyclist with passenger, as shown in Figures 9 to 12, the luminous signalling device on the passenger's helmet 14 may be operated directly by the luminous signalling means 12 of the motorcyclist (Figure 12).

According to a possible embodiment of the present invention, a plurality of luminous signalling devices 16 positioned on several helmets 14 may be operated by at least one glove 20, 201. Moreover, advantageously, a plurality of gloves 20, 201 may operate a single luminous signalling device 16.

Powering of the helmet 14 and the gloves 20, 201 may be performed in a manner known per se, for example by means of rechargeable batteries.

Advantageously, in addition to being used by motorcyclists, the helmet could be used in further applications, for example by skiers, who could thus indicate the direction chosen on skiing pistes or signal a problem or accident by means of red flashing lights which are visible from afar by any rescue services which may be deployed.

According to a possible embodiment of the present invention, the helmet 14 comprises a luminous signalling device positioned on the cap part 34 and designed to light up with continuous or flashing lights of a suitable colour for signalling an inexpert skier or in the event of fog or snow or any other problem.

Moreover, the present invention may also be used during diving in order for divers to signal a danger or an emergency in a manner similar to that described for other applications. According to this particular embodiment the glove is impermeable.

With regard to the embodiments described above, the person skilled in the art may, in order to satisfy specific requirements, make modifications to and/or replace elements described with equivalent elements, without thereby departing from the scope of the accompanying claims.

For example embodiments may be envisaged in which the signalling device 16 is applied to an already existing helmet 16.

According to a possible embodiment of the present invention, the luminous signalling device may be operated also by means of the devices on the motorcycle, as described above with reference to the prior art.

The luminous signalling means according to the present invention may be used for example also on bicycles, skates, skateboards, etc.

A timer may be provided for automatically switching off the luminous signalling device.

Obviously, a person skilled in the art, in order to satisfy any specific requirements which arise, may make further modifications and variations to the luminous signalling means 12 according to the present invention, all of which being moreover contained within the scope of protection of the invention, as defined by the following claims.

## Claims

1. Luminous signalling means (12) comprising:
at least one luminous signalling device (16) suitable for being provided on a helmet (14); and
means (18; 181) for operating the at least one luminous signalling device (16);
said luminous signalling means (12) being **characterized in that** they comprise at least one glove (20; 201) on which said operating means (18; 181) for the at least one luminous signalling device (16) are arranged.

2. Luminous signalling means (12) according to Claim 1, **characterized in that** they comprise a helmet (14) on which the at least one luminous signalling device (16) is provided.

3. Luminous signalling means (12) according to Claim 1, **characterized in that** they comprise two gloves (20; 201): a left-hand glove (20) and a right-hand glove (201).

4. Luminous signalling means (12) according to any one of the preceding claims, **characterized in that** said operating means (18, 181) comprise sensors (44, 46; 441, 461).

5. Luminous signalling means (12) according to Claim 4, **characterized in that** said sensors (44, 46; 441, 461) comprise:
a palm sensor (44, 441); and
terminal sensors (46, 461) arranged on the fingers of the glove (20, 201).

6. Luminous signalling means (12) according to any one of the preceding claims, **characterized in that** they comprise means (22, 221; 24) for communication between signalling device (16) and operating means (18, 18).

7. Luminous signalling means (12) according to Claim 6, **characterized in that** said means (22, 24) for communication between signalling device (16) and operating means (18; 181) comprise:
- a first signal emitter (22, 221) positioned on the glove (20; 221) and suitable for emitting a signal at a given wavelength; and
- a signal receiver (24) positioned on the helmet (14) and suitable for receiving a signal at the wavelength which the first signal emitter (22) is designed to emit.

8. Luminous signalling means (12) according to any one of the preceding claims, **characterized in that** the at least one luminous signalling device (16) is provided with LED lights.

9. Luminous signalling means (12) according to any one of the preceding claims, **characterized in that** said luminous signalling device (16) can be activated by means of pressure exerted on the sensors (44, 46; 441, 461).

10. Luminous signalling means (12) according to the preceding claim, **characterized in that** said luminous signalling device (16):
can be activated by means of a double pressing action on the sensors (44, 46; 441, 461), and
can be deactivated by means of a double pressing action on the sensors (44, 46; 441, 461).
